# EUROPÄISCHE PATENTANMELDUNG

(11) **EP 3 089 524 A1**
(43) Veröffentlichungstag der Anmeldung: **02.11.2016**
(21) Anmeldenummer: 16000914.8
(22) Anmeldetag: 22.04.2016
(51) Int. Cl.: H04W 52/02

(54) **ENDGERÄT MIT EINEM UHF-TRANSPONDER UND UHF-IDENTIFIZIERUNGSSYSTEM**

(30) Priorität: 29.04.2015 DE 102015005545
(71) Anmelder: Giesecke & Devrient GmbH, 81677 München (DE)
(72) Erfinder: Tea, Vui Huang, SE-12061 Stockholm (SE)

(57) **Zusammenfassung**

Die Erfindung betrifft ein Endgerät (1), umfassend eine Empfangseinrichtung (2) zum Empfang von Mitteilungen, die in einer Funkzelle (4) eines Netzwerks empfangbar sind, einen UHF-Transponder (5) sowie eine Energieversorgungseinrichtung (6), wobei der UHF-Transponder (5) in einem ersten Modus durch ein externes UHF-Lesegerät (7) ohne gesonderte Spannungsversorgung auslesbar ist und in einem zweiten Modus von der Energieversorgungseinrichtung (6) des Endgeräts (1) mit Spannung versorgt wird. Das Endgerät (1) ist dazu eingerichtet, in Reaktion auf den Empfang einer von der Empfangseinrichtung (2) empfangenen Mitteilung (CB-SMS) vorgegebenen Inhalts, die Energieversorgungseinrichtung (6) für den UHF-Transponder (5) einzuschalten.

## Beschreibung

Die Erfindung betrifft ein Endgerät mit einer Empfangseinrichtung zum Empfang von Broadcast-Mitteilungen, die in einer Funkzelle eines Nachrichtennetzwerks empfangbar sind, einem UHF-Transponder sowie einer Energieversorgungseinrichtung. Der UHF-Transponder ist in einem ersten Modus ohne gesonderte Spannungsversorgung durch ein externes UHF-Lesegerät auslesbar. In einem zweiten Modus wird der UHF-Transponder von der Energieversorgungseinrichtung des Endgeräts mit Spannung versorgt. Die Erfindung betrifft ferner ein UHF-Identifizierungssystem sowie ein Verfahren zum Betreiben eines Endgeräts.

RFID (Radio Frequency Identification)-Systeme werden in einer Vielzahl von Anwendungen genutzt, die von einer Warenüberwachung und -verfolgung über die automatische Bezahlung von Mautgebühren und Beförderungsentgelten für öffentliche Verkehrsmittel bis zu automatischen Supermarktbezahlanwendungen reichen. Bei einem typischen RFID-System ist ein RF (Radio Frequency)-Transponder an ein zu überwachendes Objekt angebracht oder in dieses integriert. Ein solcher RF-Transponder kann auch Bestandteil eines mobilen Endgeräts sein. Eine in dem RF-Transponder gespeicherte Information, z.B. ein eindeutiger Kennzeichner, kann durch ein externes RF-Lesegerät ausgelesen werden, sobald sich der RF-Transponder in einem von dem RF-Lesegerät erzeugten Feld befindet.

Im Umfeld von mobilen Endgeräten, wie z.B. Mobilfunktelefonen, Smartphones, Tablet PCs, usw., kommt bislang die NFC (Near Field Communication)-Technik zum Einsatz, die auf einer Kommunikation aus Smartcard und RFID basiert. NFC kann mit einem mobilen Endgerät als Zugriffsschlüssel an Terminals (NFC-Lesegerät) auf Inhalte und für Dienste verwendet werden, wie papierlose Eintrittskarten, Abrechnung von Beförderungsdienstleistungen, Zugangskontrolle, usw. Ein Nachteil von NFC ist dessen kurze Reichweite im Rahmen einer Kommunikation zu einem externen Lesegerät.

Um die kontaktlose Reichweite zu erhöhen, ist daher angedacht, UHF-Transponder in einem mobilen Endgerät einzusetzen. Ein UHF (Ultra High Frequency)-Transponder, der einen Transceiver und eine Antenne umfasst, kann bei geringen Kosten mit einer im Vergleich zu NFC wesentlich höheren Reichweite aufwarten. Der UHF-Transponder, der auch als Tag bezeichnet wird, umfasst Daten (z.B. den eindeutigen Kennzeichner) und ist an oder in dem Endgerät angebracht.

Es gibt drei Arten von UHF-Transpondern: Passiv, aktiv oder Batterie-unterstützt passiv (BAP). Ein passiver UHF-Transponder weist keine interne Energiequelle auf und nutzt die Energie aus dem von dem externen Lesegerät erzeugten Feld, um den UHF-Transponder mit Energie zu versorgen und eine Nachricht an das externe Lesegerät zu senden. Ein aktiver UHF-Transponder umfasst eine interne Energiequelle (z.B. Batterie). Diese wird sowohl zur Spannungsversorgung des Transponders als auch zur Erzeugung der für die Übertragung einer Nachricht benötigten Energie benutzt. Ein Batterie-unterstützter, passiver UHF-Transponder weist eine interne Energieversorgung auf. Durch diese wird der UHF-Transponder mit Spannung versorgt. Um eine Nachricht an das externe Lesegerät zu übertragen, wird jedoch die aus dem von dem Lesegerät erzeugten Feld vorhandene Energie genutzt. Ein solcher Batterie-unterstützter passiver UHF-Transponder weist eine geringe Komplexität und einfache Kommunikationsprotokolle auf. Er ist einfach zu implementieren, Massenmarkt tauglich, mit geringen Kosten bereitzustellen und weist eine hohe Reichweite für die Datenübertragung auf.

Bei der Integration eines Batterie-unterstützten, passiven UHF-Transponders kann die Batterie des mobilen Endgeräts als Energiequelle für den Batterie-unterstützten passiven UHF-Transponder genutzt werden. Dadurch wird jedoch der für andere Komponenten des mobilen Endgeräts zur Verfügung stehende Energieinhalt reduziert.

Es ist Aufgabe der vorliegenden Erfindung, ein Endgerät mit einem Batterie-unterstützten UHF-Transponder sowie ein Verfahren zum Betreiben eines Endgeräts anzugeben, bei denen ein unnötiger Energieverbrauch für die Nutzung des UHF-Transponders so gut es geht vermieden werden kann. Eine weitere Aufgabe besteht darin, ein UHF-Identifizierungssystem anzugeben, das eine hohe Energieeffizienz aufweist.

Diese Aufgaben werden gelöst durch den Gegenstand der unabhängigen Ansprüche. Vorteilhafte Ausgestaltungen ergeben sich aus den abhängigen Patentansprüchen.

Die Erfindung schlägt ein Endgerät vor, das eine Empfangseinrichtung zum Empfang von Mitteilungen, die in der Funkzelle eines Netzwerks empfangbar sind, einen UHF-Transponder sowie eine Energieversorgungseinrichtung umfasst, wobei der UHF-Transponder in einem ersten Modus ohne gesonderte Spannungsversorgung durch ein externes UHF-Lesegerät auslesbar ist und in einem zweiten Modus von der Energieversorgungseinrichtung des Endgeräts mit Spannung versorgt wird. Das Endgerät ist dazu eingerichtet, in Reaktion auf den Empfang einer von der Empfangseinrichtung empfangenen Mitteilung vorgegebenen Inhalts, die Energieversorgungseinrichtung für den UHF-Transponder einzuschalten.

Bei der in der Funkzelle empfangbaren Mitteilung handelt es sich um eine Broadcast-Mitteilung. Ein Broadcast-Mitteilung erreicht alle Teilnehmer eines lokalen Netzwerks, ohne dass sie explizit als Empfänger angegeben sind. Es kann beispielsweise eine sogenannte Cell Broadcast Message (CB-SMS) sein. Das Netzwerk kann ein Nachrichtennetzwerk sein, wie beispielsweise ein Mobilfunknetz. Alternativ oder als Teil des Mobilfunknetzes kann das Netzwerk auch ein WLAN-Netzwerk sein. Die Broadcast-Mitteilung wird durch das Netzwerk, vorzugsweise in regelmäßigen Abständen, ausgesendet. Alternativ kann die Mitteilung von dem Nachrichtnetzwerk auch in Reaktion auf eine Anfragenachricht des Endgeräts ausgesendet sein. Die Mitteilung zeigt dem Endgerät an, dass sich in der Funkzelle zumindest ein UHF-Lesegerät befindet.

Dadurch, dass in Reaktion auf den Empfang der von der Empfangseinrichtung des Endgeräts empfangenen Mitteilung die Energieversorgungseinrichtung des Endgeräts für den UHF-Transponder eingeschaltet wird, kann die UHF-Reichweite zwischen dem UHF-Transponder und dem UHF-Lesegerät erhöht werden. Gleichzeitig ist sichergestellt, dass der UHF-Transponder erst dann mit Spannung von der Energieversorgungseinrichtung des Endgeräts versorgt wird, wenn sich ein UHF-Lesegerät in der Nähe des Endgeräts befindet. Diese Information ist in der Mitteilung enthalten. Dadurch wird für die Versorgung des UHF-Transponders zu denjenigen Zeiten Energie aus der Energieversorgungseinrichtung entnommen, wenn eine Kommunikation zwischen dem UHF-Transponder und einem UHF-Lesegerät möglich ist. Zu den übrigen Zeiten kann die Energieversorgungseinrichtung von dem UHF-Transponder getrennt sein. Dadurch lässt sich ein Energie-effizienter Betrieb sicherstellen.

Der UHF-Transponder umfasst in bekannter Weise einen Transceiver und eine Antenne, so dass der UHF-Transponder Daten mit dem UHF-Lesegerät austauschen kann. Die Antenne kann ein Bestandteil des UHF-Transponders sein. Die Antenne kann auch in oder an dem Endgerät vorgesehen sein, so dass die Antennenspule im Vergleich zu einer internen Antennenspule des UHF-Transponders größer sein kann.

Das Endgerät kann in einer weiteren Ausgestaltung dazu ausgebildet sein, die Energieversorgungseinrichtung für den UHF-Transponder auszuschalten, wenn oder sobald durch die Empfangseinrichtung die kurze Mitteilung vorgegebenen Inhalts nicht mehr empfangen wird In diesem Fall wird die Spannungsversorgung zu dem UHF-Transponder unterbrochen, wenn das Endgerät die Funkzelle verlassen hat, da dann die Mitteilung, die anzeigt, dass sich ein oder mehrere UHF-Lesegeräte in der Funkzelle befinden, nicht mehr empfangbar ist.

Das Endgerät kann ferner dazu ausgebildet sein, den UHF-Transponder in einem dritten Modus zu betreiben, wenn durch die Empfangseinrichtung die Mitteilung vorgegebenen Inhalts nicht empfangbar ist, wobei in dem dritten Modus der UHF-Transponder in einem Stromsparmodus betrieben wird. Dazu kann der UHF-Transponder mit einem vorgegebenen Betriebszyklus (Duty Cycle) betrieben werden. Insbesondere kann der Duty Cycle durch eine Felddetektion eines externen UHF-Lesegeräts beeinflusst werden. Der Duty Cycle kann z.B. zwischen 100% und 12,5% betragen. In einer alternativen Ausgestaltung kann der UHF-Transponder in dem dritten Modus nach einer vorgegebenen Zeit nach dem Ausschalten der Energieversorgungseinrichtung in einen Schlafmodus versetzt werden oder in einem Leerlaufmodus betrieben werden.

In einer weiteren Ausgestaltung ist zwischen der Energieversorgungseinrichtung und dem UHF-Transponder ein durch das Endgerät steuerbares Schaltelement vorgesehen, um den UHF-Transponder mit Spannung zu versorgen oder den UHF-Transponder von der Energieversorgungseinrichtung zu trennen. Das steuerbare Schaltelement kann Bestandteil einer integrierten Schaltung des Endgeräts sein. Alternativ kann das steuerbare Schaltelement auch in dem UHF-Transponder vorgesehen sein.

Der UHF-Transponder kann in dem Endgerät integriert sein oder von außen an das Endgerät angebracht sein oder als UHF-SIM (Subscriber Identity Modul)-Karte ausgebildet sein.

Die Erfindung schlägt weiter ein UHF-Identifizierungssystem vor, das einen Sender zum Aussenden einer Mitteilung in einer Funkzelle eines Netzwerks, zumindest ein in der Funkzelle angeordnetes UHF-Lesegerät und ein Endgerät, das gemäß der vorliegenden Beschreibung ausgebildet ist, umfasst.

Bei dem Sender kann es sich um eine Base Transceiver Station (BTS) eines Mobilfunknetzwerks handeln.

Wie eingangs bereits beschrieben, handelt es sich bei der von dem Sender ausgesendeten Mitteilung um eine Cell Broadcast-Nachricht (CB-SMS). In einer dem Fachmann bekannten Weise wird eine solche Cell Broadcast-Nachricht nicht nur an ein bestimmtes Endgerät innerhalb der Funkzelle gerichtet. Vielmehr wird die Cell Broadcast-Nachricht an alle in der Funkzelle befindlichen Endgeräte übertragen. Der Empfang der Cell Broadcast-Nachricht erfolgt mit der in dem Endgerät vorgesehenen Empfangseinrichtung. Zur Klarstellung wird angemerkt, dass die Empfangseinrichtung des Endgeräts eine von den Komponenten des UHF-Transponders verschiedene Empfangseinrichtung ist.

Die Erfindung schlägt weiter ein Verfahren zum Betreiben eines Endgeräts vor, das eine Empfangseinrichtung zum Empfang von Mitteilungen, die in einer Funkzelle eines Netzwerks empfangbar sind, einen UHF-Transponder sowie eine Energieversorgungseinrichtung umfasst. Das Verfahren weist die Schritte a) des Empfangens einer Mitteilung, die dem Endgerät anzeigt, dass ein oder mehrere UHF-Lesegeräte in der Funkzelle angeordnet sind; und b) des Bereitstellens einer Spannungsversorgung für einen UHF-Transponder in Antwort auf den Empfang der Mitteilung.

Durch das Verfahren wird eine von dem Mobilfunknetzwerk ausgestrahlte Ortsinformation genutzt, um das Endgerät darüber zu informieren, zu welchem Zeitpunkt der UHF-Transponder mit Energie zu versorgen ist. Dadurch kann einerseits die Reichweite des UHF-Transponders aufgrund seiner Spannungsversorgung zu einem UHF-Lesegerät erhöht werden. Andererseits wird die Energieentnahme aus der Energiespeichervorrichtung des Endgeräts auf ein Mindestmaß begrenzt.

In einer weiteren Ausgestaltung wird die Mitteilung periodisch durch den Sender des Netzwerks ausgesendet.

Es kann weiter vorgesehen sein, dass die Spannungsversorgung für den UHF-Transponder deaktiviert wird, wenn oder sobald die Mitteilung durch das Endgerät nicht mehr empfangen wird. Dadurch wird sichergestellt, dass das Endgerät, sobald es die Funkzelle verlässt und daher die Mitteilung nicht mehr empfängt (empfangen kann), der UHF-Transponder von der Energieversorgungseinrichtung getrennt wird. Dadurch kann der Energieinhalt der Energiespeichervorrichtung des mobilen Endgeräts effizient genutzt werden.

Gemäß einer weiteren Ausgestaltung wird die Spannungsversorgung für den UHF-Transponder deaktiviert, wenn eine Transaktion zwischen dem UHF-Transponder und dem UHF-Lesegerät beendet ist. Beispielsweise kann die Spannungsversorgung für den UHF-Transponder deaktiviert werden, wenn eine Beförderungsdienstleistung abgerechnet wurde.

Die Erfindung wird nachfolgend näher anhand eines Ausführungsbeispiels in der Zeichnung erläutert.
- Fig.1: zeigt eine schematische Darstellung eines erfindungsgemäßen Endgeräts, wobei ein UHF-Transponder des Endgeräts elektrisch von einer Energieversorgungseinrichtung des Endgeräts getrennt ist,
- Fig. 2: zeigt das Endgerät aus Fig. 1, bei dem der UHF-Transponder von der Energieversorgungseinrichtung des Endgeräts mit Spannung versorgt wird,
- Fig. 3: zeigt eine schematische Darstellung, in der sich das in Fig. 1 dargestellte Endgerät außerhalb einer Funkzelle eines Nachrichtennetzwerks befindet, und
- Fig. 4: zeigt eine schematische Darstellung des Endgeräts in Fig. 2, wobei sich das Endgerät im Bereich der Funkzelle des Nachrichtennetzwerks befindet.

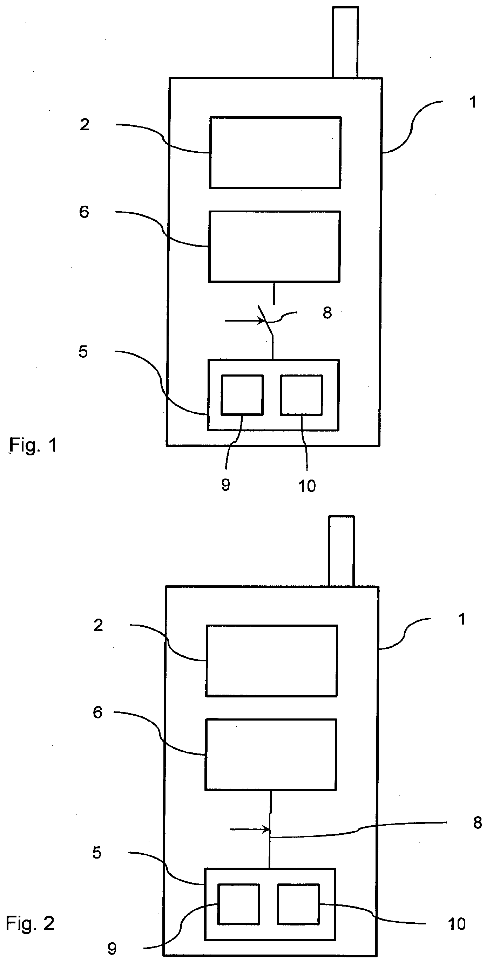

Fig. 1 zeigt eine schematische Darstellung eines erfindungsgemäßen Endgeräts 1. Das Endgerät 1 ist beispielsweise ein Mobilfunktelefon, ein Smartphone, ein Tablet-PC usw. Das Endgerät 1 verfügt über eine Empfangseinrichtung 2 sowie eine Energieversorgungseinrichtung 6. Die Energieversorgungseinrichtung 6, z.B. eine wiederaufladbare Batterie, stellt die Versorgung sämtlicher Komponenten des Endgeräts 1 mit Spannung sicher. Zudem weist das Endgerät 1 einen UHF-Transponder 5.

Der UHF-Transponder 5 umfasst in üblicher Weise einen Transceiver 9 sowie eine Antenne 10. Der UHF-Transponder 5 kann im oder an dem Endgerät angebracht sein. Insbesondere kann die Antenne 10 des UHF-Transponders an oder in dem Endgerät ausgebildet sein, so dass diese eine größere Fläche umschließt. Der UHF-Transponder 5 kann insbesondere als UHF-SIM-Karte ausgebildet sein, die in einer entsprechenden Aufnahme des Endgeräts 1 angeordnet ist.

Bei dem UHF-Transponder 5 handelt es sich um einen Batterie-unterstützten, passiven Transponder, der selektiv mit Hilfe eines steuerbaren Schaltelements 8 mit der Energieversorgungseinrichtung 6 des Endgeräts 1 verbunden werden kann. Ist die elektrische Verbindung zwischen der Energieversorgungseinrichtung 6 und dem UHF-Transponder 5, wie in Fig. 1 dargestellt, aufgetrennt, so kann der UHF-Transponder 5 mit Hilfe seiner Antenne 10 über eine verhältnismäßig kleine Distanz eine in ihm gespeicherte Information an ein UHF-Lesegerät übertragen, sobald sich der UHF-Transponder im Feld des UHF-Lesegeräts befindet. Da der UHF-Transponder 5 in diesem Modus seine Energie aus dem Feld des UHF-Lesegeräts bezieht, ist die Reichweite der Kommunikation zwischen dem UHF-Transponder 5 und dem UHF-Lesegerät begrenzt. Darüber hinaus kann die Kommunikation aufgrund äußerer Einflüsse auf einfache Weise unterbrochen werden. Wird der UHF-Transponder 8 hingegen aus der Energieversorgungseinrichtung 6 mit Spannung versorgt, wie dies in Fig. 2 gezeigt ist, so kann die Reichweite der Kommunikation um ein Mehrfaches erhöht werden.

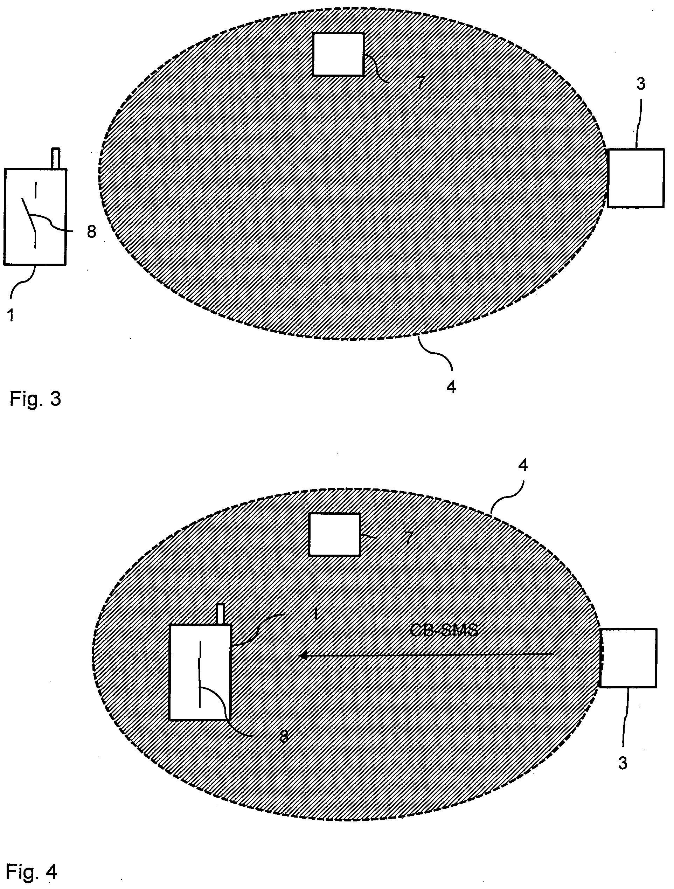

Die Steuerung des steuerbaren Schaltelements 8 erfolgt durch eine in den Fig. 1 und 2 nicht näher dargestellte Verarbeitungseinheit des Endgeräts 1. Die Schaltstellung des Schaltelements 8 wird davon abhängig gemacht, ob mittels der Empfangseinrichtung 2 des Endgeräts 1 eine Mitteilung empfangen wird, die dem Endgerät 1 anzeigt, dass ein oder mehrere UHF-Lesegeräte in einer Funkzelle eines Netzwerks angeordnet sind. Dies ist exemplarisch in den Fig. 3 und 4 dargestellt. Mit dem Bezugszeichen 3 ist ein Sender, beispielsweise eine Base Transceiver Station (BTS) eines Mobilfunknetzwerks dargestellt. Das Bezugszeichen 4 bezeichnet die Funkzelle, d.h. den von dem Sender 3 bestrahlten räumlichen Bereich. Die Funkzelle 4 ist exemplarisch ein UHF-Lesegerät angeordnet.

Befindet sich, wie in Fig. 3 dargestellt, das Endgerät 1 außerhalb der Funkzelle, d.h. kann die Empfangseinrichtung 2 des Endgeräts keine Nachrichten von dem Sender 3 des Netzwerks empfangen, so ist das steuerbare Schaltelement 8 geöffnet. Dies bedeutet, der UHF-Transponder 5 wird von der Energieversorgungseinrichtung 6 nicht mit Spannung versorgt.

Sobald das Endgerät 1 in den Bereich der Funkzelle eintritt, empfängt die Empfangseinrichtung 2 von dem Sender 3 die oben erwähnte Mitteilung. Die Mitteilung CB-SMS ist eine vorzugsweise periodisch von dem Sender 3 ausgesendete Cell Broadcast-Nachricht, insbesondere in Forme einer Kurzmitteilung. In Reaktion auf den Empfang der Kurzmitteilung CB-SMS schaltet das Endgerät die Energieversorgungseinrichtung 6 für den UHF-Transponder 5 ein, indem das steuerbare Schaltelement 8 leitend geschaltet wird (Fig. 4).

Aufgrund der Spannungsversorgung des UHF-Transponders 5 ist nun die Kommunikationsreichweite zwischen dem UHF-Transponder 5 und dem UHF-Lesegerät 7 erhöht, so dass eine Kommunikation zwischen diesen beiden Komponenten erfolgen kann. Beispielsweise kann eine Abrechnung einer Beförderungsdienstleistung erfolgen. Alternativ kann der Zutritt zu einem räumlich abgegrenzten Bereich gewährt werden.

Sobald das Endgerät 1 die Funkzelle 4 wieder verlässt, kann die Empfangseinrichtung 2 die Kurzmitteilung CB-SMS nicht mehr empfangen. In Reaktion hierauf schaltet das Endgerät 1 die Energieversorgungseinrichtung 6 für den UHF-Transponder 5 durch entsprechende Ansteuerung des steuerbaren Schaltelements 8 wieder aus. Diese Situation entspricht Fig. 3.

Alternativ kann das Ausschalten der Energieversorgungseinrichtung für den UHF-Transponder 5 auch unmittelbar nach Beendigung der Transaktion zwischen dem UHF-Transponder 5 und dem UHF-Lesegerät 7 erfolgen. Dies kann z.B. anhand einer Feststellung des Endgeräts 1, dass die Transaktion beendet ist, erfolgen.

Das beschriebene Vorgehen ist dann zweckmäßig, wenn der von der Funkzelle 4 abgedeckte Bereich mit der Kommunikationsreichweite eines oder mehrerer UHF-Lesegeräte 7 im Wesentlichen übereinstimmt. Zu diesem Zweck schließt ein Betreiber von UHF-Lesegeräten, z.B. der Betreiber eines öffentlichen Personenbeförderungsbetriebs, ein Abkommen mit dem Betreiber des Netzwerks. Bei dem Netzwerk handelt es sich beispielsweise um ein Mobilfunknetzwerk, z.B. nach den Standards GSM oder UMTS. Der Betreiber der UHF-Lesegeräte 7 informiert den Betreiber des Netzwerks über die Bereiche, in denen UHF-Lesegeräte 7 aufgestellt werden sollen. Beispielsweise können dies Zutrittsbereiche zu dem Personenbeförderungsnetzwerk, Zutrittsschranken und dergleichen sein. Mittels der UHF-Lesegeräte 7 soll wahlweise der Zutritt und/ oder das Verlassen einer das eingangs beschriebene Endgerät 1 tragenden Person überwacht werden. Beim Vorhandensein einer Schranke kann nach einer entsprechenden Kommunikation zwischen dem Endgerät und dem UHF-Lesegerät der Zutritt zu dem räumlich abgegrenzten Bereich des Personenbeförderungsbetiiebs gewährt oder verweigert werden.

Der Betreiber des Mobilfunknetzwerks identifiziert diejenigen Sender (Base Transceiver Stations), die die Bereiche, in denen die UHF-Lesegeräte aufgestellt werden sollen, abdecken. Der Betreiber des Nachrichtennetzwerks instruiert dessen Cell Broadcast Center (CBC), um die oben identifizierten Sender zur Aussendung der Kurzmitteilung CB-SMS, welche dem Endgerät 1 anzeigt, dass ein oder mehrere UHF-Lesegeräte 7 in der Funkzelle 4 angeordnet sind, ausgesendet werden. Diese als Cell Broadcast-Nachrichten ausgesendeten Kurzmitteilungen werden damit in die bekannten Bereiche (die oben bezeichneten Funkzellen 4) periodisch ausgesendet. Der Bereich einer Funkzelle 4 kann von einem einzelnen oder einer Mehrzahl an Sendern 3 ausgebildet werden. Die Frequenz und Wiederholung der Kurzmitteilungen CB-SMS wird durch den Betreiber der UHF-Lesegeräte festgelegt.

In der oben beschriebenen Weise werden die Kurzmitteilungen CB-SMS durch die Empfangseinrichtung 2 des Endgeräts 1 empfangen. Für einen Fachmann ist klar, dass der Empfang wahlweise durch das Endgerät und/oder dessen SIM-Karte erfolgen kann.

Sobald das Endgerät 1 nach dem Eintritt in die Funkzelle 4 eine solche Kurzmitteilung CB-SMS empfängt, die anzeigt, dass ein oder mehrere UHF-Lesegeräte 5 in der Funkzelle 4 angeordnet sind, wird die Energieversorgungseinrichtung 6 für den UHF-Transponder 5 eingeschaltet. Dadurch steigt die Reichweite der Kommunikation zwischen dem UHF-Transponder 5 und dem UHF-Lesegerät 7 stark an. Ebenso verbessert sich die Geschwindigkeit und die Qualität der kontaktlosen Kommunikation zwischen dem UHF-Transponder 5 und dem UHF-Lesegerät 7.

Bevor der UHF-Transponder 5 sich innerhalb der Reichweite des UHF-Lesegeräts 7 befindet, wird er in einem Stromsparmodus betrieben. Dazu kann der UHF-Transponder 5 mit einem vorgegebenen Betriebszyklus (Duty Cycle) betrieben werden. Alternativ kann der Transponder nach dem Ausschalten der Energieversorgungseinrichtung 6 in einen Schlafmodus versetzt sein. Ebenso kann er in einem Leerlaufmodus betrieben werden.

Der UHF-Transponder 5 wird optional ebenfalls in dem Stromsparmodus versetzt, nachdem die kontaktlose Transaktion zwischen dem UHF-Transponder 5 und dem UHF-Lesegerät 7 abgeschlossen ist. Aufgrund der aktiven Energieversorgung während eines Kommunikationsvorgangs kann die kontaktlose Transaktion auch in schwierigen Umgebungen mit einer Vielzahl von anderen UHF-Transpondern 5 reibungslos ablaufen.

Sobald das Endgerät 1 den vorgegebenen Bereich, d.h. die Funkzelle 4, verlässt, empfängt das Endgerät die Kurzmitteilung, die dem Endgerät anzeigt, dass ein oder mehrere UHF-Lesegeräte 7 in der Funkzelle angeordnet sind, von dem Sender 3 nicht mehr. Infolgedessen wird die Spannungsversorgung für den UHF-Transponder 5 aufgetrennt, so dass keine weitere Energie aus der Energieversorgungseinrichtung 6 entnommen wird.

## Patentansprüche

1. Endgerät (1), umfassend
- eine Empfangseinrichtung (2) zum Empfang von Broadcast-Mitteilungen, die in einer Funkzelle (4) eines Netzwerks empfangbar sind,
- einen UHF-Transponder (5) sowie
- eine Energieversorgungseinrichtung (6), wobei der UHF-Transponder (5) in einem ersten Modus durch ein externes UHF-Lesegerät (7) auslesbar ist ohne gesonderte Spannungsversorgung und in einem zweiten Modus von der Energieversorgungseinrichtung (6) des Endgeräts (1) mit Spannung versorgt wird,
**dadurch gekennzeichnet, dass**
das Endgerät (1) dazu eingerichtet ist, in Reaktion auf den Empfang einer von der Empfangseinrichtung (2) empfangenen Broadcast-Mitteilung (CB-SMS) vorgegebenen Inhalts, die Energieversorgungseinrichtung (6) für den UHF-Transponder (5) einzuschalten.

2. Endgerät nach Anspruch 1, **dadurch gekennzeichnet, dass** das Endgerät (1) dazu ausgebildet ist, die Energieversorgungseinrichtung (6) für den UHF-Transponder (5) auszuschalten, wenn oder sobald durch die Empfangseinrichtung (2) die Mitteilung (CB-SMS) vorgegebenen Inhalts nicht mehr empfangen wird.

3. Endgerät nach Anspruch 1 oder 2, **dadurch gekennzeichnet, dass** das Endgerät (1) dazu ausgebildet ist, den UHF-Transponder (5) in einem dritten Modus zu betreiben, wenn durch die Empfangseinrichtung (2) die Mitteilung (CB-SMS) vorgegebenen Inhalts nicht empfangbar ist, wobei in dem dritten Modus der UHF-Transponder (5) in einem Stromsparmodus betrieben wird.

4. Endgerät nach Anspruch 3, **dadurch gekennzeichnet, dass** der UHF-Transponder (5) mit einem vorgegebenen Betriebszyklus betrieben wird.

5. Endgerät nach Anspruch 3, **dadurch gekennzeichnet, dass** der UHF-Transponder (5) nach einer vorgegeben Zeit nach dem Ausschalten der Energieversorgungseinrichtung (6) in einen Schlafmodus versetzt oder in einem Leerlaufmodus betrieben wird.

6. Endgerät nach einem der vorhergehenden Ansprüche, **dadurch gekennzeichnet, dass** zwischen der Energieversorgungseinrichtung (6) und dem UHF-Transponder (5) ein durch das Endgerät (1) steuerbares Schaltelement (8) vorgesehen ist, um den UHF-Transponder (5) mit Spannung zu versorgen oder den UHF-Transponder (5) von der Energieversorgungseinrichtung (6) zu trennen.

7. Endgerät nach einem der vorhergehenden Ansprüche, **dadurch gekennzeichnet, dass** der UHF-Transponder (5) in dem Endgerät (1) integriert ist oder von außen an das Endgerät (1) angebracht ist oder als UHF-SIM-Karte ausgebildet ist.

8. UHF-Identifizierungssystem, umfassend einen Sender (3) zum Aussenden einer Broadcast-Mitteilung (CB-SMS) in einer Funkzelle (4) eines Netzwerks, zumindest ein in der Funkzelle (4) angeordnetes UHF-Lesegerät (7), und ein Endgerät (1), das gemäß einem der vorhergehenden Ansprüche ausgebildet ist.

9. UHF-Identifizierungssystem nach Anspruch 8, **dadurch gekennzeichnet, dass** der Sender (3) eine Base Transceiver Station eines Mobilfunknetzwerks ist.

10. UHF-Identifizierungssystem nach Anspruch 8 oder 9, **dadurch gekennzeichnet, dass** die von dem Sender (3) ausgesendete Mitteilung (CB-SMS) eine Kurznachricht ist.

11. UHF-Identifizierungssystem nach Anspruch 8, **dadurch gekennzeichnet, dass** der Sender (3) ein WLAN-Sender ist.

12. Verfahren zum Betreiben eines Endgeräts (1), das eine Empfangseinrichtung (2) zum Empfang von Broadcast-Mitteilungen, die in einer Funkzelle (4) eines Netzwerks empfangbar sind, einen UHF-Transponder (5) sowie eine Energieversorgungseinrichtung (6) umfasst, mit den Schritten:
a) Empfangen einer Broadcast-Mitteilung (CB-SMS), die dem Endgerät (1) anzeigt, dass ein oder mehrere UHF-Lesegeräte (7) in der Funkzelle (4) angeordnet sind;
b) Bereitstellen einer Spannungsversorgung für den UHF-Transponder (5) in Antwort auf den Empfang der Mitteilung (CB-SMS).

13. Verfahren nach Anspruch 12, bei dem die Broadcast-Mitteilung (CB-SMS) periodisch durch den Sender (3) ausgesendet wird.

14. Verfahren nach Anspruch 12 oder 13, bei dem die Spannungsversorgung für den UHF-Transponder (5) deaktiviert wird, wenn oder sobald die Broadcast-Mitteilung (CB-SMS) durch das Endgerät (1) nicht mehr empfangen wird.

15. Verfahren nach Anspruch 12 oder 13, bei dem die Spannungsversorgung für den UHF-Transponder (5) deaktiviert wird, wenn eine Transaktion zwischen dem UHF-Transponder (5) und dem UHF-Lesegerät (7) beendet ist.
